# EUROPÄISCHE PATENTSCHRIFT

(11) **EP 4 568 811 B1**
(45) Veröffentlichungstag und Bekanntmachung des Hinweises auf die Patenterteilung: **01.07.2026**
(21) Anmeldenummer: 22764747.6
(22) Anmeldetag: 12.08.2022
(51) Int. Cl.: B25J 9/00

(54) **ELEKTROSTATISCHER AKTOR**
ELECTROSTATIC ACTUATOR
ACTIONNEUR ÉLECTROSTATIQUE

(43) Veröffentlichungstag der Anmeldung: 18.06.2025
(73) Patentinhaber: Rheinmetall Technology Center GmbH, 40476 Düsseldorf (DE)
(72) Erfinder: STRACKE, Felix, 41460 Neuss (DE); SCHÜLLER, Mira, 41460 Neuss (DE); CARRACELAS, Javier, 41460 Neuss (DE)
(74) Vertreter: Bardehle Pagenberg Partnerschaft mbB Patentanwälte Rechtsanwälte
(86) Internationale Anmeldenummer: PCT/EP2022/072653
(87) Internationale Veröffentlichungsnummer: WO 2024/032903

(56) Entgegenhaltungen:
- US-A1- 2004 102 723
- US-A1- 2007 257 582
- US-A1- 2007 265 140
- US-A1- 2011 121 691

## Beschreibung

Die Erfindung betrifft eine Vorrichtung zur Erzeugung oder Unterstützung einer Relativbewegung zwischen zwei über eine gelenkartige Struktur miteinander verbundenen Körperteilen mit einer ersten Lastaufnahmestruktur, welche an einem ersten Körperteil befestigt ist, einer zweiten Lastaufnahmestruktur, welche an einem zweiten Körperteil befestigt ist, welches relativ zum ersten Körperteil schwenkbar ist. Derartige Vorrichtungen werden auch als Exoskelett oder, wenn diese flexibel ausgeführt sind, als Exosuit bezeichnet. Eine Exosuit ist somit eine Art Anzug, der von einem Menschen getragen werden kann, um dessen Muskelkraft mechanisch zu unterstützen. Hierbei kommen meist elektromechanische Aktoren zum Einsatz, die die zu Unterstützung des Menschen notwendige Kraft erzeugen, wobei der Exosuit die von den Aktoren bereitgestellte Kraft zwischen mindestens zwei Körperteilen überträgt.

Die US 9,950,422 B2 offenbart einen derartigen Exosuit. Die Relativbewegung der die Körperteile verbindenden Struktur wird durch flexible Linearaktoren, sogenannte Twisted-String-Aktoren (TSA), erzeugt. Die TSA umfassen mehrere parallel zueinander verlaufende flexible Kabelstränge, die durch Verdrillung miteinander und der daraus resultierenden Verkürzung eine im Wesentlichen lineare Zugkraft zwischen zwei Punkten erzeugen. Die TSA weisen im entspannten, nicht/leicht verdrillten Zustand aufgrund der flexiblen Kabelstränge zwar eine gewisse Flexibilität auf, im stark verdrillten Zustand herrscht jedoch eine relativ große Zugbeanspruchung in den einzelnen Kabelsträngen, wodurch deren Flexibilität mit zunehmender Verdrillung stark abnimmt. Ferner besitzen derartige Aktuatoren ein relativ hohes Gewicht und sind mechanisch relativ komplex. Zudem erlaubt die Verdrillung von flexiblen Kabelsträngen nur eine unidirektionale Krafterzeugung, d.h. die Erzeugung einer Zugkraft zwischen zwei Punkten.

Ferner sind elektrostatische Aktoren bekannt. Ein elektrostatischer Aktor umfasst ein Statorelement mit mehreren Statorelektroden die in eine Statorelektroden-Trägermatrix eingebettet sind, ein relativ zu dem Statorelement bewegbares Aktorelement mit mehreren Aktorelektroden, die in eine Aktorelektroden-Trägermatrix eingebettet sind, wobei das Aktorelement durch eine zwischen den Statorelektroden und den Aktorelektroden wirkende elektrostatische Kraft bewegbar ist, wobei in einem Spalt zwischen dem Statorelement und dem Aktorelement ein dielektrisches Fluid angeordnet ist, und ein Isolatorgehäuse, das das Statorelement und das Aktorelement umschließt.

Derartige elektrostatische Aktoren sind aus dem Stand der Technik bekannt. Die US 2015/0134109 offenbart beispielsweise einen elektrostatischen Aktor, der ein starres Statorelement und ein starres Aktorelement umfasst, wobei ein Spalt, der zwischen dem Statorelement und dem Aktorelement angeordnet ist, mit einem dielektrischen Fluid gefüllt ist. Idealerweise besitzt das dielektrische Fluid eine relativ hohe relative Permittivität, wodurch die Stärke des elektrischen Felds zwischen den Statorelektroden und den Aktorelektroden gegenüber einem Aktor mit einem einfachen Luftspalt erhöht werden kann, sodass infolgedessen die zwischen den Statorelektroden und den Aktorelektroden wirkende elektrostatische Kraft gegenüber einem Aktor mit einem reinen Luftspalt steigt. Daraus resultiert, dass die durch den Aktor erzeugte Betätigungskraft gegenüber einem herkömmlichen elektrostatischen Aktor mit Luftspalt deutlich gesteigert werden kann.

Die US 2011/0121691 A1 offenbart einen ähnlichen elektrostatischen Aktor, wobei das Statorelement und das Aktorelement flexibel ausgebildet sein können, sodass der elektrostatische Aktor insgesamt verformbar ist.

Auch die US 2007/0257582 A1 offenbart einen flexiblen elektrostatischen Aktor.

Der Erfindung liegt daher die Aufgabe zugrunde, eine leistungsstarke und effiziente Vorrichtung zur Erzeugung oder Unterstützung einer Relativbewegung zwischen zwei über eine gelenkartige Struktur miteinander verbundenen Körperteilen zu schaffen.

Diese Aufgabe wird durch eine Vorrichtung zur Erzeugung oder Unterstützung einer Relativbewegung zwischen zwei über eine gelenkartige Struktur miteinander verbundenen Körperteilen mit den Merkmalen des Anspruchs 1 gelöst.

Die erfindungsgemäße Vorrichtung zur Erzeugung oder Unterstützung einer Relativbewegung zwischen zwei über eine gelenkartige Struktur miteinander verbundenen Körperteilen umfasst eine erste Lastaufnahmestruktur, die an einem ersten Körperteil befestigt ist. Ferner umfasst die Vorrichtung eine zweite Lastaufnahmestruktur, die an einem zweiten Körperteil befestigt ist, wobei das zweite Körperteil relativ zum ersten Körperteil schwenkbar ist. Die Lastaufnahmestrukturen können starr ausgeführt sein, sind vorzugsweise aber zumindest teilweise aus flexiblen und/oder weichen Materialien, wie Bändern oder Gurten gebildet. Eine derartige Vorrichtung wird allgemein als Exosuit bezeichnet oder ist zumindest Teil eines Exosuits. Die gelenkartige Struktur ist vorzugsweise ein Gelenk eines menschlichen Körpers wie beispielsweise ein Hüftgelenk oder Ellbogengelenk, kann aber auch durch die Wirbelsäule gebildet werden, über die beispielsweise der Kopf relativ zum Torso oder der Torso relativ zur Hüfte bewegt werden können. Entsprechend werden unter Körperteilen nicht nur die Extremitäten, sondern auch Brustkorb, Kopf oder Gesäß aber auch Füße, Zehen, Hände und Finger verstanden.

Die erfindungsgemäße Vorrichtung umfasst ferner einen elektrostatischen Aktor. Der elektrostatische Aktor umfasst ein Statorelement mit mehreren Statorelektroden, die in eine Statorelektroden-Trägermatrix eingebettet sind. Ferner umfasst der elektrostatische Aktor ein relativ zu dem Statorelement bewegbares Aktorelement, mit mehreren Aktorelektroden, die in eine Aktorelektroden-Trägermatrix eingebettet sind. Folglich sind die Elektroden in den jeweiligen Trägermatrizen vollständig von dem Trägermatrizenmaterial umschlossen, wobei die Elektroden über einzelne Anschlusselemente verfügen müssen, die aus dem Trägermatrizenmaterial herausragen.

Die Statorelektroden werden mit einer mehrphasigen Wechselspannung beaufschlagt, wodurch ein wellenartig fortschreitendes Potential in dem Statorelement induziert wird. Zusätzlich werden die Aktorelektroden mit einer mehrphasigen Wechselspannung beaufschlagt, wodurch in dem Aktorelement ein weiteres wellenartig fortschreitendes Potential induziert wird, das phasenversetzt zu dem wellenartigen Potential des Statorelements ausgebildet ist. Durch die elektrostatische Interaktion zwischen den wellenartigen Potentialen des Statorelements und des Aktorelements wird eine elektrostatische Kraft erzeugt, die zwischen den Statorelektroden und den Aktorelektroden wirkt und auf diese Weise das Aktorelement in Bewegung setzt.

Das Statorelement und das Aktorelement sind beabstandet zueinander angeordnet, sodass zwischen dem Aktorelement und dem Statorelement ein Spalt gebildet ist, in dem ein dielektrisches Fluid angeordnet ist. Es hat sich gezeigt, dass die zwischen dem Statorelement und dem Aktorelement wirkende elektrostatische Kraft maßgeblich von der Spannung in den Elektroden bzw. der Stärke des daraus resultierenden elektrischen Felds abhängt, wobei die Spannungsstärke wiederum von der Durchschlagfestigkeit des dielektrischen Fluids bzw. dessen Permittivität abhängt. Bisher wurde in vielen Anwendung Luft als Dielektrikum genutzt, welche eine relativ niedrige Permittivität sowie Durchschlagfestigkeit aufweist. Der Einsatz dielektrischer Fluide mit relativ hoher Permittivität und/oder hoher Durchschlagfestigkeit ermöglicht stärkere elektrische Felder und somit die Erzeugung höherer Betätigungskräfte durch den Aktor.

Sowohl das Statorelement als auch das Aktorelement sind von einem Isolatorgehäuse umschlossen. Das Isolatorgehäuse isoliert den Aktor gegenüber der Umgebung, sodass insbesondere ein Schutz vor der an den Elektroden anliegenden Spannung besteht. Dies ist bei der Applikation des Aktors in einem Exosuit besonders wichtig, da die Aktoren relativ nah am Körper des Benutzers angeordnet sind und auch im Falle eines Kurzschlusses die Sicherheit des Benutzers jederzeit gewährleistet sein muss.

Das Isolatorgehäuse ist zudem flexibel ausgebildet und ist daher in relativ hohem Maße elastisch verformbar. Ferner sind die Trägermatrizen gleichermaßen flexibel ausgebildet. Dadurch lässt sich auch das Statorelement sowie das Aktorelement relativ leicht und in relativ hohem Maße verformen. Somit ist der gesamte elektrostatische Aktor verformbar, insbesondere biegbar, sodass er sich besonders für die Anwendung in einem Exosuit eignet, da der Aktor sich beispielsweise beim Beugen eines Gelenks in passender Weise mit verformen kann und damit mehr Bewegungsfreiheit für den Träger des Exosuits bietet. Dennoch wird die Funktionalität des Aktors durch die Biegung nicht oder nicht relevant beeinträchtigt, was insbesondere durch den Einsatz des dielektrischen Fluids ermöglicht wird, welches unabhängig von der Art der Verformung des Aktors eine wirksame dielektrische Schicht zwischen dem Aktorelement und dem Statorelement bildet.

Die erste Lastaufnahmestruktur ist mit dem Statorelement des erfindungsgemäßen elektrostatischen Aktors verbunden. Somit ist das Statorelement mittelbar mit dem ersten Körperteil verbunden. Die zweite Lastaufnahmestruktur ist mit dem Aktorelement des erfindungsgemäßen elektrostatischen Aktors verbunden, sodass das Aktorelement mittelbar mit dem zweiten Körperteil verbunden ist.

Der Aktor ist somit zwischen den beiden Lastaufnahmestrukturen angeordnet, so dass bei Betätigung des Aktors das eine Körperteil relativ zum anderen bewegt wird. Entsprechend kann die erfindungsgemäße Vorrichtung mittels des Aktors eine ohnehin durch Muskelkraft initiierte Bewegung eines Menschen unterstützen und auf diese Weise dessen Leistungsfähigkeit, Muskelkraft, Ausdauer, o.ä. steigern oder auch Belastungen reduzieren und dadurch Verletzungen oder Schäden am menschlichen Körper verhindern. Auch kann ein solcher Aktor in beide Richtungen eine gleich große Kraft erzeugen, so dass Bewegungen in beiden Richtungen, also zum Beugen und zum Strecken erzeugt werden können. Ferner kann der Aktor Bewegungen des Menschen bremsen.

Alternativ lässt sich mit einer derartigen Vorrichtung die Muskelkraft des Menschen vollständig ersetzen, indem die zur Relativbewegung notwendige Kraft vollständig von dem Aktor erzeugt wird und mithilfe der jeweiligen Lastaufnahmestrukturen auf die damit verbundenen Körperteile übertragen wird. Dadurch ließen sich beispielsweise Körperteile gelähmter Personen bewegen.

Aufgrund der zuvor genannten Merkmale, insbesondere aufgrund des Einsatzes des genannten dielektrischen Fluids, weist der erfindungsgemäße Aktor eine besonders hohe Leistungsdichte auf, ist bezüglich der geforderten Kraft relativ genau einstellbar und sehr präzise steuerbar. Der Aktor eignet sich daher besonders gut für die Anwendung in einem Exosuit. Zudem ergibt sich durch die Flexibilität des Aktors und die daraus resultierende Anpassungsfähigkeit an den menschlichen Körper ein besonders hoher Tragekomfort des Exosuits.

Gemäß einer besonders bevorzugten Ausgestaltung der vorliegenden Erfindung schließt das Isolatorgehäuse das dielektrische Fluid ein. Das Isolatorgehäuse dichtet folglich das Innere des elektrostatischen Aktors gegenüber der Umgebung ab, sodass insbesondere das dielektrische Fluid nicht aus dem Isolatorgehäuse austreten oder sich verflüchtigen kann. Zusätzlich schützt das Isolatorgehäuse das Innere des elektrostatischen Aktors vor dem Eindringen von Schmutz, Fremdkörpern, Feuchtigkeit und/oder ähnlichem.

Gemäß einer besonders vorteilhaften Ausgestaltung der Erfindung ist das dielektrische Fluid eine Flüssigkeit. Dielektrische Flüssigkeiten zeichnen sich unter anderem durch ihre Selbstheilungseigenschaften nach einem elektrischen Durchschlag aus. Zudem bildet die dielektrische Flüssigkeit eine Art Gleitschicht zwischen dem Statorelement und dem Aktorelement, sodass eine relativ reibungsarme Betätigung des Aktorelements ermöglicht wird. Ferner eignen sich Flüssigkeiten als Dielektrikum für einen elektrostatischen Aktor aufgrund ihrer hohen Wärmeleitfähigkeit und ihrer nahezu vollständigen Inkompressibilität.

Gemäß einer besonders bevorzugten Ausgestaltung der Erfindung besitzt die dielektrische Flüssigkeit eine relative Permittivität von über 2. Die relative Permittivität steht in direktem Zusammenhang mit der Stärke des elektrischen Felds, das von den Elektroden erzeugt wird. Je höher die Stärke des elektrischen Feldes ist, desto größer ist die von dem Aktor erzeugte Kraft. Bei einer relativen Permittivität von über 2 ist bei der Nutzung dielektrischer Flüssigkeiten gewährleistet, dass ein relativ starkes elektrisches Feld erzeugt werden kann, sodass die von dem Aktor erzeugte Kraft derart groß ist, dass der Aktor sich für die Anwendung in einem Exosuit eignet.

Gemäß einer besonders bevorzugten Ausgestaltung der Erfindung ist der Aktor ein Linearaktor, wobei die Relativbewegung des Aktorelements eine Linearbewegung ist. Die Aktorelektroden sowie die Statorelektroden sind dazu jeweils reihenartig parallel zueinander angeordnet. Infolge der Spannungsbeaufschlagung der Aktorelektroden und der Statorelektroden wirken anziehende oder abstoßende Kräfte zwischen den Aktorelektroden und den Statorelektroden, wodurch die Relativbewegung zwischen Statorelement und Aktorelement erzeugt wird. Das fortschreitende wellenartige Potential sorgt für einen Polarisationswechsel der Stator- /Aktorelektroden, sodass eine kontinuierliche Linearbewegung des Aktorelements entsteht. Das Aktorelement des Linearaktors führt somit eine translatorische Bewegung aus, die insbesondere dazu geeignet ist, eine Zug- und/oder Druckkraft auszuüben und damit vorzugsweise als Teil eines Exosuits eine Relativbewegung zwischen Körperteilen zu erzeugen oder zu unterstützen. Aufgrund seiner Flexibilität lässt sich der erfindungsgemäße elektrostatische Aktor besonders gut als biegbarer Linearaktor einsetzen, der eine lineare Relativbewegung auch im gebogenen Zustand ermöglicht und daher aufgrund seiner Anpassungsfähigkeit an eine vorgegebene Kontur besonders gut zur Unterstützung der menschlichen Muskulatur in einem Exosuit geeignet ist.

In einer bevorzugten Ausgestaltung der Erfindung ist das Isolatorgehäuse aus einem elektrisch nichtleitenden Kunststoff hergestellt. Beispielsweise könnte das Isolatorgehäuse aus Polypropylen (PP) oder Polyethylenterephthalat (PET) hergestellt werden. Derartige Kunststoffe bieten relativ gute elektrische Isolationseigenschaften, sind kostengünstig, flexibel und relativ leicht. Weiterhin sind derartige Kunststoffe relativ beständig gegenüber Umwelteinflüssen wie UV-Licht, Feuchtigkeit und Alterung.

In einer weiteren vorteilhaften Ausgestaltung der Erfindung sind sowohl die Statorelektroden-Trägermatrix als auch die Aktorelektroden-Trägermatrix als Dünnschichtfilm ausgebildet. Die Dicke des einzelnen Dünnschichtfilms beträgt dabei höchstens 0,5 mm, wobei der elektrostatische Aktor aus mindestens zwei dieser Dünnschichtfilme, nämlich einem ersten Dünnschichtfilm als Aktorelement und einem zweiten Dünnschichtfilm als Statorelement, besteht. Darüber hinaus können die Dünnschichtfilme zur Erhöhung der Kraftausbeute mehrschichtig ausgeführt sein, d.h. über mehrere Elektrodenschichten verfügen. Ferner wird durch den Einsatz derartiger Dünnschichtfilm-Trägermatrizen die hohe Flexibilität des Aktors sichergestellt.

Gemäß einer besonders vorteilhaften Ausgestaltung der Erfindung beträgt die Wandstärke des Isolatorgehäuses höchstens 1,5 mm. Aus der dünnen Wandstärke resultiert eine relativ hohe Flexibilität des Isolatorgehäuses, wodurch auch eine entsprechende Flexibilität des Aktors sichergestellt ist. Ferner ergibt sich durch die dünnwandige Ausgestaltung ein geringes Gewicht des Aktors, was insbesondere bei dem Einsatz des elektrostatischen Aktors in einem Exosuit vorteilhaft ist.

In einer bevorzugten Ausgestaltung der Erfindung weist das Isolatorgehäuse zumindest eine Öffnung auf, durch die eine mit dem Aktorelement verbundene Kraftübertragungsstruktur geführt ist. Mittels der Kraftübertragungsstruktur kann das Aktorelement im Innenraum des Isolatorgehäuses mittelbar mit einem zu betätigenden externen Element beispielsweise mit einem Teil eines Exosuits verbunden werden. Die Öffnung weist zudem ein Dichtelement auf, das den Isolatorgehäuse-Innenraum gegenüber der Umgebung abdichtet. Das Dichtelement ist im Bereich der Öffnung zwischen dem Isolatorgehäuse und der Kraftübertragungsstruktur angeordnet und verhindert insbesondere ein Austreten des dielektrischen Fluids aus dem Isolatorgehäuse-Innenraum sowie ein Eintreten von Schmutz und Feuchtigkeit in den Isolatorgehäuse-Innenraum.

In einer alternativen Ausgestaltung der Erfindung weist das Isolatorgehäuse zumindest teilweise eine Faltenbalgstruktur auf, die in einem Isolatorgehäuseabschnitt mit dem Aktorelement verbunden ist. Die Faltenbalgstruktur ist vorzugsweise ein integraler Bestandteil des Isolatorgehäuses, sodass das Isolatorgehäuse mit der Faltenbalgstruktur einen geschlossenen gegenüber der Umgebung abgedichteten Isolatorgehäuse-Innenraum bildet. Die Faltenbalgstruktur ist in Bezug auf die Bewegungsrichtung des Aktorelements derart orientiert, dass bei der Relativbewegung des Aktorelements die Faltenbalgstruktur aufgefaltet oder entfaltet wird. Der vorzugsweise benachbart zu der Faltenbalgstruktur angeordnete Isolatorgehäuseabschnitt ist fest mit dem Aktorelement verbunden, sodass eine externe Kraftübertragungsstruktur an der Außenseite des Isolatorgehäuses mit dem Isolatorgehäuseabschnitt verbunden werden kann. Dadurch ist die Kraftübertragungsstruktur mittelbar mit dem Aktorelement verbunden, ohne dass es einer direkten Verbindung in den Isolatorgehäuse-Innenraum bedarf. Der Einsatz einer flexiblen Faltenbalgstruktur ermöglicht es, dass der fest mit dem Aktorelement verbundene Isolatorgehäuseabschnitt mit dem Aktorelement bewegt wird und dennoch als integraler Bestandteil des Isolatorgehäuse eine Abdichtung des Isolatorgehäuse-Innenraums gegenüber der Umgebung gewährleistet. Somit sind keine separaten Dichtelemente notwendig, um den Isolatorgehäuse-Innenraum gegenüber der Umgebung abzudichten.

In einer weiteren alternativen Ausgestaltung der Erfindung weist das Isolatorgehäuse zumindest teilweise eine elastisch dehnbare Wandstruktur auf. Die elastisch dehnbare Wandstruktur ist ein integraler Bestandteil des Isolatorgehäuses, sodass das Isolatorgehäuse einen geschlossenen und nach außen hin abgedichteten Isolatorgehäuse-Innenraum bildet. Die elastisch dehnbare Wandstruktur ist in einem Isolatorgehäuseabschnitt fest mit dem Aktorelement verbunden. Durch die feste Verbindung des Isolatorgehäuseabschnitts mit dem Aktorelement folgt der Isolatorgehäuseabschnitt der Bewegung des Aktorelements, wobei sich die elastisch dehnbare Wandstruktur dehnt bzw. zusammenzieht. An der Außenseite des Isolatorgehäuses kann eine externe Kraftübertragungsstruktur unmittelbar mit dem Isolatorgehäuseabschnitt und somit mittelbar mit dem Aktorelement verbunden werden. Die Kraftübertragungsstruktur könnte beispielsweise Teil eines Exosuits sein oder jede andere mit einem Körperteil verbundene zu betätigende Struktur. Aufgrund des Einsatzes der elastisch dehnbaren Wandstruktur ist es möglich, die Kraftübertragungsstruktur über die Außenseite des Isolatorgehäuses mit dem im Inneren des Isolatorgehäuses angeordneten Aktorelement mittelbar zu verbinden und dennoch einen in sich geschlossenen und abgedichteten Isolatorgehäuse-Innenraum ohne zusätzliche separate Dichtstellen zu schaffen.

In einer besonders bevorzugten Ausgestaltung der Erfindung ragen elektrische Leitungen zur Übertragung elektrischer Energie und/oder von Steuersignalen durch eine Öffnung des Isolatorgehäuses und sind mit den Statorelektroden und Aktorelektroden im Isolatorgehäuse-Innenraum verbunden. Vorzugsweise sind mehrere Leitungen zu einem Kabel zusammengefasst, welche zum einen die Steuersignale der Steuerungseinheit übermittelt und zum anderen die Stator- und Aktorelektroden mit der notwendigen Spannung versorgen. Zusätzlich können weitere Leitungen vorgesehen werden, über die beispielsweise Informationen wie Sensordaten von dem Aktor an die Steuereinheit übertragen werden. Auch kann elektrische Energie von dem Aktor an eine entsprechende Einheit übertragen werden, beispielsweise, falls der Aktor im Rahmen einer Rekuperationsfunktion elektrische Energie erzeugt. Die elektrischen Leitungen verlaufen durch eine Öffnung des Isolatorgehäuses und zu den Statorelektroden und Aktorelektroden vorzugsweise zumindest teilweise in oder an mit dem Aktor verbundenen Kraftübertragungsstrukturen. Die elektrischen Leitungen können beispielsweise an als Kraftübertragungsstruktur dienenden flexible Bänder entlang geführt werden. Die elektrischen Leitungen werden anschließend durch das Isolatorgehäuse in den Isolatorgehäuse-Innenraum geführt, beispielsweise durch entsprechende mit Dichtelemente versehene Öffnungen. Alternativ können die elektrischen Leitungen auch während der Herstellung des Isolatorgehäuses darin eingebettet werden oder mit durch die Öffnungen der zuvor genannten Zugkabel geführt werden. Ferner können die elektrischen Leitungen auch in den Bändern oder in den Zugkabeln verlaufen, wodurch Sie beispielsweise vor Beschädigungen geschützt sind. Falls die elektrischen Leitungen in den mit dem Aktor verbundenen Zugkabeln verlaufen, müssen zudem keine zusätzlichen Öffnungen in dem Isolatorgehäuse vorgesehen werden. Stattdessen können die elektrischen Leitungen durch die Zugkabel in den Isolatorgehäuse-Innenraum geführt werden.

Ein Ausführungsbeispiel einer erfindungsgemäßen Vorrichtung zur Erzeugung oder Unterstützung einer Relativbewegung zwischen zwei über eine gelenkartige Struktur miteinander verbundenen Körperteilen mit eine elektrostatischen Aktor sowie mehrere Ausführungsbeispiele elektrostatischer Aktoren sind in den Figuren dargestellt und werden nachfolgend beschrieben.
Figur 1 zeigt den grundsätzlichen prinzipiellen Aufbau eines elektrostatischen Aktors für eine erfindungsgemäßen Vorrichtung in einer schematischen Schnittansicht.
Figur 2 zeigt ein erstes Ausführungsbeispiel eines elektrostatischen Aktors für eine erfindungsgemäßen Vorrichtung in einer schematischen Schnittansicht.
Figur 3 zeigt ein zweites Ausführungsbeispiel eines elektrostatischen Aktors für eine erfindungsgemäßen Vorrichtung in einer schematischen Schnittansicht.
Figur 4 zeigt ein drittes Ausführungsbeispiel eines elektrostatischen Aktors für eine erfindungsgemäßen Vorrichtung in einer schematischen Schnittansicht.
Figur 5 zeigt ein Ausführungsbeispiel einer erfindungsgemäßen Vorrichtung zur Erzeugung oder Unterstützung einer Relativbewegung zwischen zwei über eine gelenkartige Struktur miteinander verbundenen Körperteilen mit einem elektrostatischen Aktor.

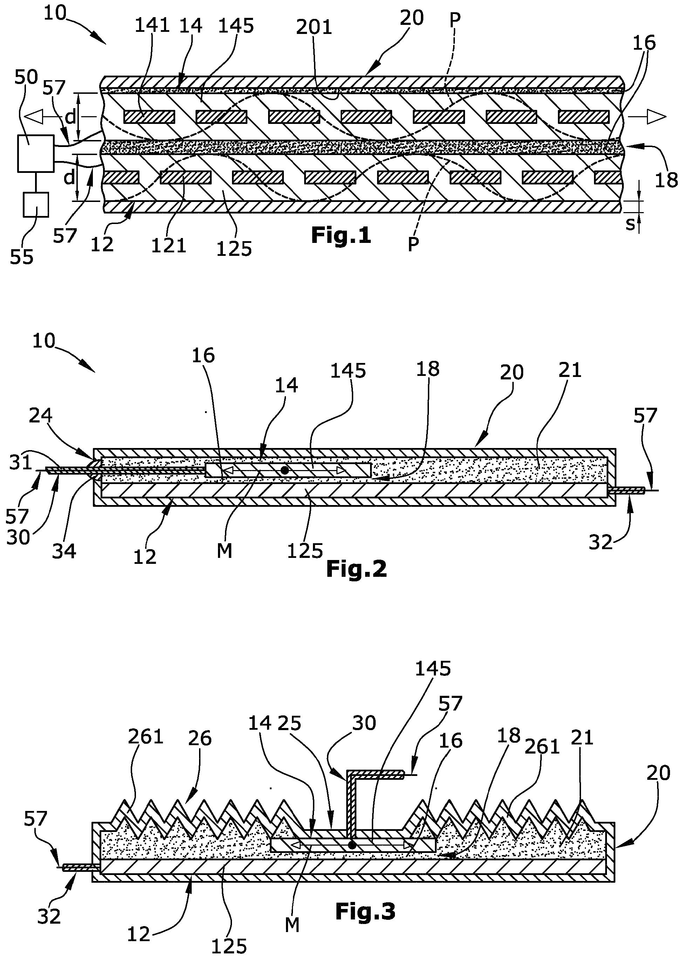

Die Figur 1 zeigt schematisch einen elektrostatischen Linearaktor 10. Dieser Linearaktor 10 umfasst ein Statorelement 12 mit einer aus einer vollständig flexiblen Dünnfilmschicht gebildeten Statorelektroden-Trägermatrix 125, die beispielsweise aus einem Polyimid, das als Isolator dient, hergestellt werden kann. In die Statorelektroden-Trägermatrix 125 ist eine Vielzahl an Statorelektroden 121 eingebettet, die reihenartig und in gleichem Abstand zueinander hintereinander angeordnet sind, wobei die Statorelektroden 121 phasenweise miteinander verschaltet sind. Die Schichtdicke d dieser Statorelektroden-Trägermatrix 125 liegt bei ca. 0,025 mm.

Der Linearaktor 10 umfasst ferner ein Aktorelement 14 welches analog zu dem Statorelement 12 aufgebaut ist. Das Aktorelement 14 umfasst eine aus einer vollständig flexiblen Dünnfilmschicht gebildeten Aktorelektroden-Trägermatrix 145, die beispielsweise aus einem Polyimid, das als Isolator dient, hergestellt werden kann. In die Aktorelektroden-Trägermatrix 145 ist eine Vielzahl an Aktorelektroden 141 eingebettet, die reihenartig und in gleichem Abstand zueinander hintereinander angeordnet sind, wobei die Aktorelektroden 141 phasenweise miteinander verschaltet sind. Die Schichtdicke d dieser Aktorelektroden-Trägermatrix 145 liegt ebenfalls bei ca. 0,025 mm.

Zwischen dem Statorelement 12 und dem Aktorelement 14 ist ein Spalt 18 gebildet, in dem sich ein dielektrisches Fluid 16 befindet. Das dielektrische Fluid 16 ist beispielsweise eine Flüssigkeit mit einer relativ hohen Permittivität sowie guten Gleiteigenschaften.

Ein Mehrphasen-Wechselstromsignal wird mittels einer externen Steuerungselektronik 50 und einem externen Energiespeicher 55 als Spannungsquelle erzeugt. Dieses Mehrphasen-Wechselstromsignal wird an die Statorelektroden 121 sowie die Aktorelektroden 141 angelegt, wodurch die Elektroden 121, 141 mit einer Mehrphasen-Wechselspannung versorgt werden. Im vorliegenden Ausführungsbeispiel werden entsprechende dreiphasige Wechselspannungen an die Elektroden 121, 141 angelegt.

Im Einzelnen werden Spannungen aufeinanderfolgend an die Elektroden 121, 141 angelegt, die jedoch phasenversetzt zueinander ausgebildet sind. Wenn diese dreiphasigen sinusförmigen Spannungen angelegt werden, entwickeln sich im Statorelement 12 und im Aktorelement 14 Wellenpotentiale P. Durch die Phasendifferenz zwischen diesen beiden Wellenpotentialen P wird eine elektrostatische Kraft zwischen dem Statorelement 12 und dem Aktorelement 14 erzeugt, wodurch das Aktorelement 14 translatorisch auf dem Statorelement 12 bewegt wird, wobei das Statorelement 12 festgehalten wird. Dabei ermöglicht die hohe Permittivität des dielektrischen Fluids 16 die Erzeugung relativ hoher elektrostatischer Kräfte, sodass eine relativ hohe translatorische Betätigungskraft des Linearaktors 10 erreicht wird.

Das Statorelement 12 sowie das Aktorelement 14 sind von einem dünnwandigen und flexiblen Isolatorgehäuse 20 umschlossen, welches das Innere des Aktors 10, nämlich den Isolatorgehäuse-Innenraum 21 gegenüber der Umgebung abdichtet. Dadurch wird das dielektrische Fluid 16 innerhalb des Isolatorgehäuses 20 eingeschlossen und vor einer Verflüchtigung beziehungsweise einem Auslaufen geschützt. Die Flexibilität des Isolatorgehäuses 20 ist vergleichbar mit der Flexibilität der Trägermatrizen 125, 145, wodurch der Aktor 10 als Ganzes flexibel und daher insbesondere biegbar ist. Zusätzlich ist das Isolatorgehäuse 20 aus einem elektrisch nichtleitenden Material hergestellt und isoliert den Isolatorgehäuse-Innenraum 21 elektrisch gegenüber der Umgebung, sodass die elektrische Sicherheit insbesondere beim Einsatz relativ hoher Spannungen jederzeit gewährleistet ist. Die Dicke s des Isolatorgehäuses liegt bei max. 1,5 mm.

Das dielektrische Fluid 16, das in dem Spalt 18 zwischen dem Statorelement 12 und dem Aktorelement 14 angeordnet ist, ermöglicht zusätzlich ein relativ reibungsarmes Gleiten des Aktorelements 14 auf dem Statorelement 12, wenn die mittels der Elektroden 121, 141 erzeugte elektrostatische Kraft das Aktorelement 14 in Bewegung versetzt. Ferner bildet das dielektrische Fluid 16 einen Schmierfilm zwischen dem Aktorelement 14 und einer Innenwand 201 des Isolatorgehäuses 20, wodurch die Reibung zwischen Aktorelement 14 und Isolatorgehäuse 20 insbesondere dann, wenn der Aktor 10 gebogen ist, relativ gering ist.

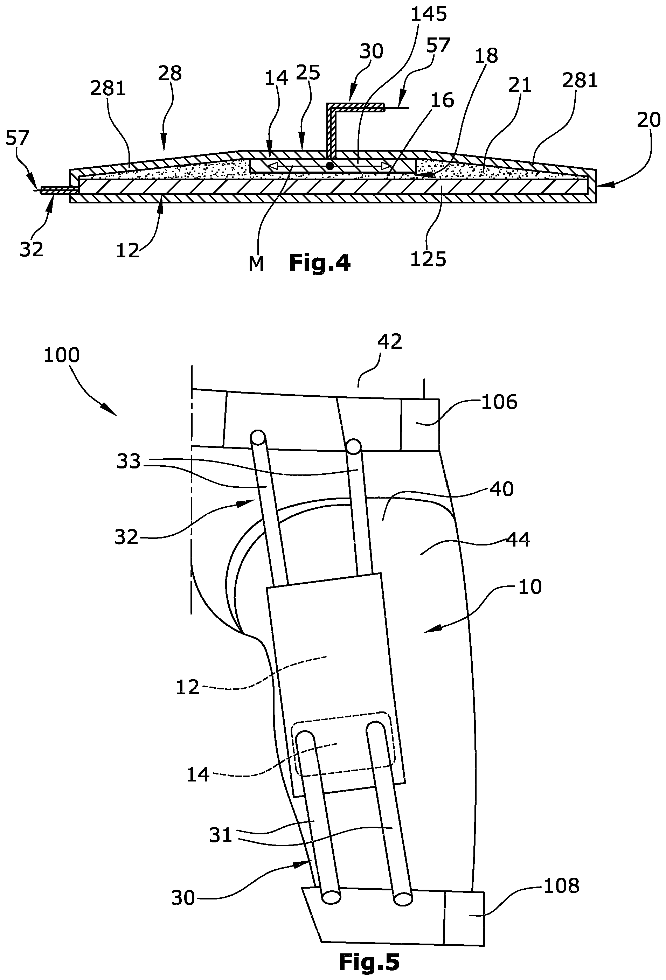

Der in Figur 2 gezeigte Linearaktor 10 entspricht von seinem prinzipiellen Aufbau dem in Figur 1 gezeigten Linearaktor 10, der als Grundlage für alle Ausführungsbeispiele dient. Aus Gründen der besseren Übersichtlichkeit sind die Elektroden 121, 141 in der Figur 2 sowie in den Figuren 3 und 4 nicht dargestellt, wobei deren Anordnung der Anordnung der Elektroden 121, 141 in Figur 1 entspricht.

Im Detail verfügt der Linearaktor 10 der Figur 2 über ein zwei Öffnungen 24 aufweisendes, aber ansonsten rundum geschlossenes Isolatorgehäuse 20, das den mit dem dielektrischen Fluid 16 gefüllten Isolatorgehäuse-Innenraum 21 gegenüber der Umgebung abdichtet. Damit die Bewegung des Aktorelements 14 übertragen werden kann, ist eine Kraftübertragungsstruktur 30 mit dem Aktorelement 14 verbunden. Die Kraftübertragungsstruktur 30 wird durch vorzugsweise zwei beabstandete und im Wesentlichen parallel zueinander angeordnete flexible Zugkabel 31 gebildet, wobei sich die Zugkabel 31 von dem Aktorelement 14 durch korrespondierende Öffnungen 24 in dem Isolatorgehäuse 20 in Bewegungsrichtung M des Aktorelements 14 nach außen erstrecken. Die Zugkabel 31 können somit an einem zu betätigenden ersten Element oder einer Struktur befestigt werden, während das Statorelement 12 über eine zweite durch das Isolatorgehäuse 20 geführte Kraftübertragungsstruktur 32 an einem zweiten Element oder Struktur befestigt ist, sodass durch Bewegen des Aktorelements 14 zwischen den beiden Kraftübertragungsstrukturen 30, 32 eine Relativbewegung erzeugt werden kann. Damit der Isolatorgehäuse-Innenraum 21 trotz der sich aus dem Isolatorgehäuse 20 heraus erstreckenden Zugkabel 31 gegenüber der Umgebung abgedichtet ist, weisen die Öffnungen 24 in dem Isolatorgehäuse 20 Dichtelemente 34 auf, die den Spalt zwischen dem Zugkabel 31 und der jeweiligen korrespondierenden Öffnung 24 dichtend verschließen. Auf diese Weise ist der Isolatorgehäuse-Innenraum 21 nach außen hin vollständig abgedichtet. Dennoch kann die Bewegung des Aktorelements 14 zuverlässig nach außen übertragen werden. Ferner verlaufen elektrische Leitungen 57 durch die Kraftübertragungsstrukturen 30, 32 in den Isolatorgehäuse-Innenraum 21, die zur Kontaktierung der Elektroden 121, 141 dienen. Alternativ können entsprechende Öffnungen mit Dichtelementen vorgesehen werden, durch die die elektrischen Leitungen 57 in den Isolatorgehäuse-Innenraum 21 geführt werden.

Figur 3 zeigt eine alternative Ausführung des elektrostatischen Linearaktors 10, der sich lediglich hinsichtlich des Aufbaus des Isolatorgehäuses 20 von dem in Figur 2 gezeigten Linearaktor 10 unterscheidet. Das Isolatorgehäuse 20 des in Figur 3 gezeigten Aktors 10 ist rundum geschlossen und umfasst auf der dem Statorelement 12 abgewandten Seite des Aktorelements 14 eine integrale Faltenbalgstruktur 26. Die Faltenbalgstruktur 26 erstreckt sich auf dieser Seite des Aktors 10 über die gesamte Länge und Breite des Isolatorgehäuses 20, wobei die einzelnen Falten 261 derart orientiert sind, dass sich die Faltenbalgstruktur 26 in Bewegungsrichtung M des Aktorelements 14 falten und entfalten lässt. Die Innenseite der Faltenbalgstruktur 26 ist in einem Isolatorgehäuseabschnitt 25 mit dem Aktorelement 14 fest verbunden. In dem Isolatorgehäuseabschnitt 25 ist die Faltenbalgstruktur 26 dazu eben ausgebildet, d.h. sie weist dort keine Falten auf. Auf diese Weise wird eine flächige Verbindung mit dem Aktorelement 14 geschaffen.

In Figur 3 ist das Aktorelement 14 in Bezug auf die Bewegungsrichtung M ungefähr mittig zu dem Statorelement 12 positioniert, sodass auch der Isolatorgehäuseabschnitt 25 in Bezug auf die Bewegungsrichtung M ungefähr mittig zu dem Statorelement 12 positioniert ist. In Bezug auf die Ansicht der Figur 3 weist die Faltenbalgstruktur 26 rechts und links von dem Isolatorgehäuseabschnitt 25 dieselbe Anzahl an Falten 261 auf, die sich je nach Bewegungsrichtung M auf einer Seite des Isolatorgehäuseabschnitts 25 auffalten und auf der anderen Seite entfalten. Dadurch kann in dem sich mit dem Aktorelement 14 mitbewegenden Isolatorgehäuseabschnitt 25 eine externe Kraftübertragungsstruktur 30 von außen durch das Isolatorgehäuse 20 an dem Aktorelement 14 angreifen. Ferner ist eine weitere Kraftübertragungsstruktur 32 durch das Isolatorgehäuse 20 mit dem Statorelement 12 verbunden. Die Abdichtung des Isolatorgehäuses 20 an den entsprechenden Durchtrittsstellen erfolgt beispielswiese dadurch, dass die Kraftübertragungsstrukturen 30, 32 bei der Herstellung des Isolatorgehäuses 20 umspritzt werden. Die Kontaktierung der Elektroden 121, 141 wird analog zu dem Aktor 10 der Figur 2 mittels in den Kraftübertragungsstrukturen 30, 32 verlaufenden elektrischen Leitungen 57 realisiert. Das Isolatorgehäuse 20 mit der Faltenbalgstruktur 26 stellt somit eine in sich geschlossene Einheit dar, sodass der Isolatorgehäuse-Innenraum 21 nach außen hin vollständig isoliert ist. Die Flexibilität und die Isolationseigenschaften des Isolatorgehäuses 20 werden dadurch erreicht, dass das Isolatorgehäuse 20 vorzugsweise aus Polypropylen (PP) oder aus Polyethylenterephthalat (PET) hergestellt und ca. 0,5 mm dick ist, wodurch es relativ leicht, flexibel und elektrisch isolierend ist.

Figur 4 zeigt ein weiteres auf dem in Figur 1 gezeigten Aktor 10 basierendes Ausführungsbeispiel eines Linearaktors 10 mit einem sich von den anderen Ausführungsbeispielen unterscheidenden Isolatorgehäuse 20. Das Isolatorgehäuse 20 des in Figur 4 gezeigten Aktors 10 weist eine integrale Wandstruktur 28 auf, die aus einem elastisch besonders dehnbaren Material, beispielsweise aus einem silikonbasierten Kunststoff, hergestellt ist und ist ca. 0,1 mm dick. Die elastisch dehnbare Wandstruktur 28 ist auf der dem Statorelement 12 abgewandten Seite des Aktorelements 14 angeordnet und ist in einem Isolatorgehäuseabschnitt 25 mit dem Aktorelement 14 fest verbunden. Der Isolatorgehäuseabschnitt 25 bewegt sich zusammen mit dem Aktorelement 14, wenn dieses bewegt wird, wobei sich die in Bezug auf die Bewegungsrichtung M angrenzenden elastischen Wandabschnitte 281 der Wandstruktur 28 dehnen oder zusammenziehen. Damit sich einer der Wandabschnitte 281 zusammenziehen kann, müssen die elastischen Wandabschnitte 281 in der in Figur 4 dargestellten Position des Aktorelements 14 vorgespannt sein. Die Vorspannung sollte so groß sein, dass sich der jeweilige elastische Wandabschnitt 281 faltenfrei zusammenziehen kann, wenn das Aktorelement 14 in seine jeweilige Endposition bewegt wird.

Aufgrund der festen Verbindung zwischen dem Aktorelement 14 und dem sich mitbewegenden Isolatorgehäuseabschnitt 25 kann eine externe Kraftübertragungsstruktur 30 durch das Isolatorgehäuse 20 an dem Aktorelement 14 angreifen. Die Kontaktierung der Elektroden 121, 141 wird analog zu dem Aktor 10 der Figur 2 mittels in den Kraftübertragungsstrukturen 30, 32 verlaufenden elektrischen Leitungen 57 realisiert. Folglich weist der Aktor 10 der Figur 4 im Gegensatz zu der in Figur 2 gezeigten Ausführung des Aktors 10 keine Dichtstellen nach außen hin auf, sodass das Isolatorgehäuse 20 mit der elastischen Wandstruktur 28 eine in sich geschlossene Einheit darstellt und somit der Isolatorgehäuse-Innenraum 21 nach außen hin vollständig isoliert ist. Die restlichen Wände des Isolatorgehäuses 20 sind analog zu den zuvor genannten Ausführungsbeispielen flexibel ausgebildet und aus einem elektrisch isolierenden Material hergestellt. Dabei kann es sich entweder um dasselbe elastisch dehnbare Material handeln, aus dem auch die elastische Wandstruktur 28 hergestellt ist oder um einen anderen flexiblen Kunststoff der einstückig mit dem elastischen Material der Wandstruktur 28 verbunden ist, sodass die Dichtigkeit des Isolatorgehäuses 20 gewährleistet ist.

Figur 5 zeigt exemplarisch eine Vorrichtung 100 zur Erzeugung oder Unterstützung einer Relativbewegung zwischen zwei über eine gelenkartige Struktur 40 miteinander verbundenen Körperteilen 42,44. Bei dem ersten Körperteil 42 handelt es sich um einen menschlichen Torso 42, der über die gelenkartige Struktur 40, nämlich ein Hüftgelenk 40, mit dem zweiten Körperteil 44, nämlich einem Oberschenkel 44 verbunden ist. Die Vorrichtung 100, die auch als Exosuit bezeichnet werden kann, umfasst eine erste Lastaufnahmestruktur 106, die den Torso 42 des Trägers im Beckenbereich gürtelartig umschließt. Eine zweite Lastaufnahmestruktur 108 umschließt den Oberschenkel 44 des Trägers. Somit sind beide Lastaufnahmestrukturen 106, 108 mit dem jeweiligen Körperteil 42, 44 derart verbunden, dass eine Kraft über die Lastaufnahmestrukturen 106, 108 zwischen beiden Körperteilen 42, 44 übertragen werden kann. Die Kraft wird hier beispielhaft von einem elektrostatischen Linearaktor 10 gemäß Figur 4 erzeugt.

Der Aktor 10 ist mit den Lastaufnahmestrukturen 106, 108 über Kraftübertragungsstrukturen 30, 32 beispielsweise flexible Bänder 31, 33 verbunden, wobei die erste Lastaufnahmestruktur 106 über flexible Bänder 33 und über das Isolatorgehäuse 20 mit dem Statorelement 12 und die zweite Lastaufnahmestruktur 108 über flexible an der elastisch dehnbaren Wandstruktur 26 des Linearaktors 10 der Figur 4 angreifenden Bändern 31 mit dem Aktorelement 14 verbunden ist. Durch Betätigung des Aktors 10 beispielsweise, wenn das Aktorelement 14 in Richtung Torso 42 bewegt wird, kann über die Lastaufnahmestruktur 108 an dem Oberschenkel 44 des Trägers dessen Bein relativ zum Torso 42 geschwenkt und dadurch angehoben werden, wobei das Hüftgelenk 40 den Drehpunkt bildet. Durch die Bewegung des Aktorelements 14 in die entgegengesetzte Richtung kann das Bein wieder gestreckt werden. Dadurch kann beispielsweise das Treppensteigen erleichtert werden.

Beim dem hier gezeigten Ausführungsbeispiel handelt es sich um eines von vielen möglichen Ausführungsbeispielen. Die Erfindung ist daher nicht auf das vorliegende Ausführungsbeispiel beschränkt. Beispielsweise könnten die reihenartig angeordneten Elektroden 121, 141 in dem Statorelement 12 und /oder dem Aktorelement 14 bezogen auf die Dickenrichtung versetzt zueinander, d.h. nicht auf einer einzigen Ebene angeordnet sein. Auch könnten statt einer beispielsweise zwei separate Spannungsquellen vorgesehen sein, die Statorelement 12 und Aktorelement 14 separat versorgen und dadurch mit unterschiedlichen Frequenzen anregen. Ferner könnte statt einer dreiphasigen Spannung beispielsweise eine vierphasige Spannung zur Versorgung des Aktors 10 vorgesehen sein. Bei dem in Figur 2 gezeigten Aktor 10 könnte alternativ nur ein einziges Zugkabel 31 vorgesehen sein. Ferner können die elektrischen Leitungen 57 alternativ außerhalb, bzw. abseits der Kraftübertragungsstrukturen 30, 32 verlaufen. Ferner kann die Position an der die Kraftangriffsstrukturen 30, 32 an dem Statorelement 12 bzw. an dem Aktorelement 14 angreifen, variieren. Alternativ kann die in Figur 4 gezeigte erste Lastaufnahmestruktur 106 mit dem Aktorelement 14 und die zweite Lastaufnahmestruktur 108 mit dem Statorelement 12 verbunden sein. Ferner kann statt einer dielektrischen Flüssigkeit 16 ein dielektrisches Gas als Dielektrikum zwischen dem Statorelement 12 und dem Aktorelement 14 eingesetzt werden.

## Patentansprüche

1. Vorrichtung (100) zur Erzeugung oder Unterstützung einer Relativbewegung zwischen zwei über eine gelenkartige Struktur (40) miteinander verbundenen Körperteilen (42, 44) mit
einer ersten Lastaufnahmestruktur (106), welche an einem ersten Körperteil (42) befestigt ist,
einer zweiten Lastaufnahmestruktur (108), welche an einem zweiten Körperteil (44) befestigt ist, welches relativ zum ersten Körperteil (42) schwenkbar ist, und
einem elektrostatischen Aktor (10), umfassend:
ein Statorelement (12) mit mehreren Statorelektroden (121) die in eine Statorelektroden-Trägermatrix (125) eingebettet sind,
ein relativ zu dem Statorelement (12) bewegbares Aktorelement (14) mit mehreren Aktorelektroden (141), die in eine Aktorelektroden-Trägermatrix (145) eingebettet sind, wobei
das Aktorelement (14) durch eine zwischen den Statorelektroden (121) und den Aktorelektroden (141) wirkende elektrostatische Kraft bewegbar ist, wobei in einem Spalt (18) zwischen dem Statorelement (12) und dem Aktorelement (14) ein dielektrisches Fluid (16) angeordnet ist, und
ein Isolatorgehäuse (20), das das Statorelement (12) und das Aktorelement (14) umschließt,
**wobei**
sowohl die Trägermatrizen (125, 145) als auch das Isolatorgehäuse (20) flexibel ausgebildet sind, und wobei
die erste Lastaufnahmestruktur (106) mit dem Statorelement (12) des elektrostatischen Aktors (10) verbunden ist und die zweite Lastaufnahmestruktur (108) mit dem Aktorelement (14) des elektrostatischen Aktors (10) verbunden ist.

2. Vorrichtung (100) gemäß Anspruch 1,
**dadurch gekennzeichnet, dass**
das Isolatorgehäuse (20) das dielektrische Fluid (16) einschließt und den elektrostatischen Aktor (10) nach außen hin abdichtet.

3. Vorrichtung (100) gemäß Anspruch 1 oder 2,
**dadurch gekennzeichnet, dass**
das dielektrische Fluid (16) eine Flüssigkeit ist.

4. Vorrichtung (100) gemäß Anspruch 3,
**dadurch gekennzeichnet, dass**
die relative Permittivität der dielektrischen Flüssigkeit (16) größer als 2 ist.

5. Vorrichtung (100) gemäß einem der vorhergehenden Ansprüche,
**dadurch gekennzeichnet, dass**
der Aktor (10) ein Linearaktor ist, wobei die Relativbewegung des Aktorelements (14) eine Linearbewegung ist.

6. Vorrichtung (100) gemäß einem der vorhergehenden Ansprüche,
**dadurch gekennzeichnet, dass**
das Isolatorgehäuse (20) aus einem elektrisch nichtleitenden Kunststoff hergestellt ist.

7. Vorrichtung (100) gemäß einem der vorhergehenden Ansprüche,
**dadurch gekennzeichnet, dass**
die Trägermatrizen (125, 145) jeweils als Dünnschichtfilm ausgebildet sind.

8. Vorrichtung (100) gemäß Anspruch 7,
**dadurch gekennzeichnet, dass**
die Dicke (d) des Dünnschichtfilms höchstens 0,5 mm beträgt.

9. Vorrichtung (100) gemäß einem der vorhergehenden Ansprüche,
**dadurch gekennzeichnet, dass**
die Wandstärke (s) des Isolatorgehäuses (20) höchstens 1,5 mm beträgt.

10. Vorrichtung (100) gemäß einem der vorhergehenden Ansprüche,
**dadurch gekennzeichnet, dass**
das Isolatorgehäuse (20) mindestens eine Öffnung (24) aufweist, durch die eine mit dem Aktorelement (14) verbundene Kraftübertragungsstruktur (30) geführt ist, wobei ein Isolatorgehäuse-Innenraum (21) mittels mindestens einem Dichtelement (34) gegenüber der Umgebung abgedichtet ist.

11. Vorrichtung (100) gemäß einem der Ansprüche 1-9,
**dadurch gekennzeichnet, dass**
das Isolatorgehäuse (20) zumindest teilweise eine Faltenbalgstruktur (26) aufweist, die in einem Isolatorgehäuseabschnitt (25) mit dem Aktorelement (14) verbunden ist.

12. Vorrichtung (100) gemäß einem der Ansprüche 1-9,
**dadurch gekennzeichnet, dass**
das Isolatorgehäuse (20) zumindest teilweise eine elastisch dehnbare Wandstruktur (28) aufweist, die in einem Isolatorgehäuseabschnitt (25) mit dem Aktorelement (14) verbunden ist.

13. Vorrichtung (100) gemäß einem der vorhergehenden Ansprüche,
**dadurch gekennzeichnet, dass**
elektrische Leitungen (57) zur Übertragung elektrischer Energie und/oder von Steuersignalen durch eine Öffnung (24) des Isolatorgehäuses (20) ragen und mit den Statorelektroden (121) und Aktorelektroden (141) im Isolatorgehäuse-Innenraum (21) verbunden sind.

14. Vorrichtung (100) gemäß einem der vorhergehenden Ansprüche,
**dadurch gekennzeichnet, dass**
die elektrischen Leitungen (57) zumindest teilweise in oder an mit dem Aktor (10) verbundenen Kraftübertragungsstrukturen (30, 32) verlaufen.

## Claims

1. Apparatus (100) for generating or assisting a relative movement between two body parts (42, 44) which are connected to one another via a joint-like structure (40), having a first load-receiving structure (106) which is attached to a first body part (42),
having a second load-receiving structure (108) which is attached to a second body part (44) which is pivotable relative to the first body part (42), and having an electrostatic actuator (10), comprising:
a stator element (12) having a plurality of stator electrodes (121) which are embedded in a stator electrode carrier matrix (125),
an actuator element (14) which is movable relative to the stator element (12) and has a plurality of actuator electrodes (141) which are embedded in an actuator electrode carrier matrix (145), wherein
the actuator element (14) is movable by an electrostatic force which acts between the stator electrodes (121) and the actuator electrodes (141), wherein a dielectric fluid (16) is arranged in a gap (18) between the stator element (12) and the actuator element (14), and an insulator housing (20) which encloses the stator element (12) and the actuator element (14), wherein
both the carrier matrices (125, 145) and the insulator housing (20) are of formed flexibly, and wherein the first load-receiving structure (106) is connected to the stator element (12) of the electrostatic actuator (10) and the second load-receiving structure (108) is connected to the actuator element (14) of the electrostatic actuator (10).

2. Apparatus (100) according to claim 1, **characterized in that** the insulator housing (20) encloses the dielectric fluid (16) and seals the electrostatic actuator (10) with respect to the outside.

3. Apparatus (100) according to claim 1 or 2, **characterized in that** the dielectric fluid (16) is a liquid.

4. Apparatus (100) according to claim 3, **characterized in that** the relative permittivity of the dielectric fluid (16) is greater than 2.

5. Apparatus (100) according to one of the preceding claims, **characterized in that** the actuator (10) is a linear actuator, wherein the relative movement of the actuator element (14) is a linear movement.

6. Apparatus (100) according to one of the preceding claims, **characterized in that** the insulator housing (20) is produced from an electrically non-conductive plastic.

7. Apparatus (100) according to one of the preceding claims, **characterized in that** the carrier matrices (125, 145) are formed as a thin-film, respectively.

8. Apparatus (100) according to claim 7, **characterized in that** the thickness (d) of the thin-film is at most 0.5 mm.

9. Apparatus (100) according to one of the preceding claims, **characterized in that** the wall thickness (s) of the insulator housing (20) is at most 1.5 mm.

10. Apparatus (100) according to one of the preceding claims, **characterized in that** the insulator housing (20) has at least one opening (24) through which a force transmission structure (30) connected to the actuator element (14) is guided, wherein an insulator housing interior (21) is sealed off from the surroundings by means of at least one sealing element (34).

11. Apparatus (100) according to one of claims 1-9, **characterized in that** the insulator housing (20) at least partially has a bellows structure (26) which is connected to the actuator element (14) in an insulator housing portion (25).

12. Apparatus (100) according to one of claims 1-9, **characterized in that** the insulator housing (20) at least partially has an elastically expandable wall structure (28) which is connected to the actuator element (14) in an insulator housing portion (25).

13. Apparatus (100) according to one of the preceding claims, **characterized in that** electrical lines (57) for transmitting electrical energy and/or control signals project through an opening (24) of the insulator housing (20) and are connected to the stator electrodes (121) and actuator electrodes (141) in the insulator housing interior (21).

14. Apparatus (100) according to one of the preceding claims, **characterized in that** the electrical lines (57) run at least partially in or on force transmission structures (30, 32) connected to the actuator (10).

## Revendications

1. Dispositif (100) pour générer ou supporter un mouvement relatif entre deux parties de corps (42, 44) reliées entre elles par une structure articulée (40) avec
une première structure de réception de charge (106) qui est fixée à une première partie de corps (42),
une seconde structure de réception de charge (108) qui est fixée à une seconde partie de corps (44) qui est pivotante par rapport à la première partie de corps (42), et
un actionneur électrostatique (10) comprenant :
un élément de stator (12) avec plusieurs électrodes de stator (121) qui sont intégrées dans une matrice porteuse d'électrodes de stator (125),
un élément d'actionneur (14) mobile par rapport à l'élément de stator (12) avec plusieurs électrodes d'actionneur (141) qui sont intégrées dans une matrice porteuse d'électrodes d'actionneur (145), dans lequel
l'élément d'actionneur (14) peut être déplacé par une force électrostatique agissant entre les électrodes de stator (121) et les électrodes d'actionneur (141), dans lequel un fluide diélectrique (16) est disposé dans une fente (18) entre l'élément de stator (12) et l'élément d'actionneur (14), et
un boîtier isolant (20) qui entoure l'élément de stator (12) et l'élément d'actionneur (14),
**dans lequel**
tant les matrices porteuses (125, 145) que le boîtier isolant (20) sont réalisés de manière flexible, et dans lequel
la première structure de réception de charge (106) est reliée à l'élément de stator (12) de l'actionneur électrostatique (10) et la seconde structure de réception de charge (108) est reliée à l'élément d'actionneur (14) de l'actionneur électrostatique (10).

2. Dispositif (100) selon la revendication 1,
**caractérisé en ce que**
le boîtier isolant (20) enferme le fluide diélectrique (16) et étanchéifie l'actionneur électrostatique (10) vis-à-vis de l'extérieur.

3. Dispositif (100) selon la revendication 1 ou 2,
**caractérisé en ce que**
le fluide diélectrique (16) est un liquide.

4. Dispositif (100) selon la revendication 3,
**caractérisé en ce que**
la permittivité relative du liquide diélectrique (16) est supérieure à 2.

5. Dispositif (100) selon l'une des revendications précédentes,
**caractérisé en ce que**
l'actionneur (10) est un actionneur linéaire, le mouvement relatif de l'élément d'actionneur (14) étant un mouvement linéaire.

6. Dispositif (100) selon l'une des revendications précédentes,
**caractérisé en ce que**
le boîtier isolant (20) est constitué d'un plastique non conducteur électriquement.

7. Dispositif (100) selon l'une des revendications précédentes,
**caractérisé en ce que**
les matrices porteuses (125, 145) sont respectivement réalisées sous forme de film mince.

8. Dispositif (100) selon la revendication 7,
**caractérisé en ce que**
l'épaisseur (d) du film mince est de 0,5 mm maximum.

9. Dispositif (100) selon l'une des revendications précédentes,
**caractérisé en ce que**
l'épaisseur de paroi (s) du boîtier isolant (20) est de 1,5 mm maximum.

10. Dispositif (100) selon l'une des revendications précédentes,
**caractérisé en ce que**
le boîtier isolant (20) présente au moins une ouverture (24) à travers laquelle passe une structure de transmission de force (30) reliée à l'élément d'actionneur (14), un espace intérieur de boîtier isolant (21) étant étanchéifié par rapport à l'environnement au moyen d'au moins un élément d'étanchéité (34).

11. Dispositif (100) selon l'une des revendications 1 à 9,
**caractérisé en ce que**
le boîtier isolant (20) présente au moins partiellement une structure de soufflet (26) qui est reliée à l'élément d'actionneur (14) dans une section de boîtier isolant (25).

12. Dispositif (100) selon l'une des revendications 1 à 9, **caractérisé en ce que**
le boîtier isolant (20) présente au moins partiellement une structure murale (28) élastiquement extensible qui est reliée à l'élément d'actionneur (14) dans une section de boîtier isolant (25).

13. Dispositif (100) selon l'une des revendications précédentes,
**caractérisé en ce que**
des câbles électriques (57) pour la transmission d'énergie électrique et/ou de signaux de commande dépassent par une ouverture (24) du boîtier isolant (20) et sont reliés aux électrodes de stator (121) et aux électrodes d'actionneur (141) dans l'espace intérieur de boîtier isolant (21).

14. Dispositif (100) selon l'une des revendications précédentes,
**caractérisé en ce que**
les câbles électriques (57) passent au moins partiellement dans ou sur des structures de transmission de force (30, 32) reliées à l'actionneur (10).
